# EUROPÄISCHE PATENTSCHRIFT

(11) **EP 2 186 184 B1**
(45) Veröffentlichungstag und Bekanntmachung des Hinweises auf die Patenterteilung: **31.12.2014**
(21) Anmeldenummer: 08760180.3
(22) Anmeldetag: 29.05.2008
(51) Int. Cl.: H02K 23/66

(54) **ELEKTRISCHE MASCHINE MIT EINEM KOMMUTATOR, SOWIE VERFAHREN ZUM BETREIBEN DER ELEKTRISCHEN MASCHINE**
ELECTRIC MACHINE HAVING A COMMUTATOR, AND METHOD FOR OPERATING THE ELECTRIC MACHINE
MOTEUR ÉLECTRIQUE COMPORTANT UN COMMUTATEUR ET PROCÉDÉ POUR FAIRE FONCTIONNER CE MOTEUR ÉLECTRIQUE

(30) Priorität: 25.07.2007 DE 102007034613
(43) Veröffentlichungstag der Anmeldung: 19.05.2010
(73) Patentinhaber: Robert Bosch GmbH, 70442 Stuttgart (DE)
(72) Erfinder: FABER, Thomas, 76744 Woerth-Maximiliansau (DE); ROOS, Gerald, 77855 Sasbachried (DE)
(86) Internationale Anmeldenummer: PCT/EP2008/056588
(87) Internationale Veröffentlichungsnummer: WO 2009/013049

(56) Entgegenhaltungen:
- DE-A1-102004 062 813
- GB-A- 2 317 058
- JP-A- 6 054 499
- JP-A- 2005 033 843
- US-A- 5 432 421

## Beschreibung

### Stand der Technik

Die Erfindung geht aus von einer elektrischen Maschine mit einem Kommutator, sowie einem Verfahren zum Betreiben der elektrischen Maschine nach der Gattung der unabhängigen Ansprüche.

Mit der EP 0 917 755 B1 ist eine Kommutierungsvorrichtung eines Gleichstrommotors bekannt geworden, bei der Bürsten an einer Kontaktfläche der Lamellen eines Kommutators anliegen. Dabei erfasst eine elektronische Schaltung die Frequenz der Welligkeit des Motorstroms, um daraus ein Maß für die Drehzahl des Elektromotors zu bestimmen. Zur Gewinnung von einer zuverlässigen Drehzahlinformation weisen die Kanten der Kommutatorlamellen einen bestimmten Winkel zur Längsachse des Kommutators, bzw. zu den Kanten der Bürsten auf. Ein solcher Kommutator ist sehr aufwändig herzustellen und bietet keine Möglichkeit, eine Frequenz der Welligkeit kleiner als die Nutfrequenz zu erzeugen.

Bei solchen Elektromotoren wird der Wechselanteil des Stromsignals zur Drehzahlerkennung ausgewertet. Die Welligkeit dieses Signals wird durch verschiedene Ursachen erzeugt. Ein großer Anteil an der Welligkeit hat die Anzahl der Nuten des Kommutators. Im Stromsignal lässt sich die Nutzahl und deren Vielfachen erkennen. Dabei tritt die Ordnung des kleinsten gemeinsamen Vielfachen aus Nutzahl und Polzahl meist dominierend auf. Hervorgerufen wird diese Welligkeit im unteren Drehzahlbereich (kleinere Drehzahlen) und unter großer Last durch die Variation des Ankerwiderstandes über die Kommutierung. Nahe der Leerlaufdrehzahl und bei geringem Strom wird die Welligkeit durch die Variation der induzierten Spannung, hervorgerufen durch die Spulenwicklungen im Magnetfeld, erzeugt. Bei mittlerer Motorlast wird die Welligkeit im zeitlichen Verlauf des Stromsignals durch beide Effekte verursacht. Beide Effekte können zueinander phasenverschoben sein und sich in verschiedenen Arbeitspunkten eliminieren, so das die Nutordnung und deren Vielfachen im Stromverlauf über die Motorkennlinie deutlich variieren und auch verschwinden können.

Weiterhin treten im Stromverlauf Stromrippel mit Ordnungen kleiner als die der Nutordnung auf. Diese sind meist Vielfache der Magnetpole. Hervorgerufen werden diese Ordnungen der Stromrippel durch ungewollte Toleranzen in der Symmetrie des magnetischen Kreis wie z.B. Positions- oder Werkstofftoleranzen der Magnete. Diese Ordnungen im zeitlichen Stromverlauf verhindern durch deren Unregelmäßigkeit eine zuverlässige Auswertung zur Bestimmung des Motor-Drehzahlsignals. Zur Auswertung der Nutordnung der Stromrippel muss weiterhin die Welligkeit eine gewisse Amplitudenhöhe überschreiten, um die Signale auswerten zu können. Weiterhin variieren die Amplituden der Ordnungen über verschiedene Arbeitspunkte, was eine Auswertung zusätzlich erschwert. Bei Motoren mit größerer Nutzahl liegt die dominierende Ordnung im Stromverlauf der Stromrippel durch die hohe Anzahl der Nuten und Magnetpole so hoch, dass eine Auswerteelektronik mit höherer Abtastfrequenz zu Bestimmung der Motordrehzahl erforderlich wird. Dies bedeutet einen höheren Aufwand und höhere Kosten, da die Mikrocontroller schneller und besser sein müssen.

Mit der GB 2317058 A ist eine elektrische Maschine bekannt geworden, bei der ein Widerstand zwischen zwei Kommutatorlamellen angeordnet ist, um das Motorstromsignal für eine Auswertung desselben positiv zu beeinflussen. Sie weist die Merkmale der Präambel des Anspruchs 1 auf.

Die JP 6054499 zeigt eine Gleichrichteranordnung, bei der parallel zu den Rotorspulen Zehnerdioden oder Varistoren geschaltet sind, um eine Funkenerzeugung zu unterbinden.

### Offenbarung der Erfindung

### Vorteile der Erfindung

Die erfindungsgemäße elektrische Maschine gemäß dem Anspruch 1, sowie das erfindungsgemäße Verfahren zum Betreiben derselben mit den Merkmalen der unabhängigen Ansprüche 10-13 haben demgegenüber den Vorteil, dass durch die Anordnung eines elektrischen Widerstandes zwischen den Kommutatorlamellen ein zusätzlicher markanter Stromrippel generiert wird, der relativ einfach von den anderen Amplitudenänderungen unterschieden werden kann, die durch die normale Kommutatorbewegung mit den elektrisch angeschlossenen Wicklungsspulen im Magnetfeld erzeugt werden. Das Einfügen eines solchen elektrischen Widerstands hat den wesentlichen Vorteil, dass damit die Höhe der Amplitudenänderung durch die Wahl des Widerstandswerts beeinflusst werden kann, wobei die Frequenz der durch den Widerstand erzeugten Stromamplitudenänderung unabhängig vom Lastzustand der elektrischen Maschine ist. Durch die Verwendung eines solchen erfindungsgemäßen Kommutators kann zuverlässig die Drehzahlinformation auch bei einer elektrischen Maschine mit einer hohen magnetischen Polzahl und vielen Kommutatorlamellen mit einer relativ einfachen Elektronikeinheit gewonnen werden. Der Winkelabstand zwischen den beiden mit dem Widerstand verbundenen Kommutatorlamellen entspricht in etwa dem Winkel der Polteilung der elektrischen Maschine entspricht. Dadurch werden mit jeder Rotorumdrehung genauso viele Widerstands-Stromrippel erzeugt, wie die elektrische Maschine Magnetpole aufweist. Wenn der Polteilungswinkel nicht genau einem Vielfachen einer Winkelausdehnung einer Kommutatorlamelle entspricht, kann der dabei zum Polteilungswinkel nächst größere, oder nächst kleinerer Winkelabstand zwischen den zwei durch den Widerstand verbundenen Kommutatorlamellen gewählt werden. Von besonderem Vorteil erweist sich die Anordnung von vier Magnetpolen mit einem Polteilungswinkel von etwa 90°, die mit besonders hohem Wirkungsgrad auf einem umlaufend ausgebildeten Magnetring ausgebildet werden können. Die elektrische Maschine weist vier Magnetpole auf, wobei bei dem 14-nutigen Kommutator die erste Kommutatorlamelle mit der in Umfangsrichtung vierten oder fünften Kommutatorlamelle verbunden ist. Die zwei mittels des Widerstands miteinander verbundenen Kommutatorlamellen sind derart gewählt, dass die dadurch generierte Frequenz des Widerstand-Stromrippels kleiner ist, als die Nutfrequenz der elektrischen Maschine ohne Anordnung eines Widerstands. Dadurch kann die Abtastrate reduziert und entsprechend die Kosten für den Mikrocontroller reduziert werden. Durch die Drehung des Rotors kontaktieren die Kohlebürsten bei der Polzahl vier vierfach die Kommutatorlamellen, an welchen der Widerstand angeschlossen ist. In dem Fall liegt die gesamte Klemmenspannung an dem Widerstand an und es fließt ein größerer Strom. Für den restlichen Teil der Umdrehung fließt durch den Widerstand nur der Strom, der durch den Spannungsunterschied zwischen den Kommutatorlamellen getrieben wird.

Durch die in den abhängigen Ansprüchen aufgeführten Maßnahmen sind vorteilhafte Weiterbildungen und Verbesserungen der in den unabhängigen Ansprüchen angegebenen Ausführungen möglich. Besonders vorteilhaft wird der elektrische Widerstand zwischen genau zwei Kommutatorlamellen eingefügt, so dass bei der Bestromung der beiden Kommutatorlamellen immer zusätzlich zum Motorstrom durch die Ankerwicklungen ein definierter Strom durch den konstanten Widerstand fließt. Dieser zusätzliche Strom kann im zeitlichen Signalverlauf des Stromes sehr zuverlässig separiert werden.

Wird zusätzlich zu dem Widerstand zwischen den Kommutatorlamellen eine Diode in Reihe geschaltet, kann die Anzahl der generierten Stromrippel halbiert werden, da der Strom durch den Widerstand nur in eine Richtung fließen kann. Dadurch kann vorteilhaft die Frequenz des auszuwertenden Stromrippel-Signals gesenkt werden, wodurch geringere Anforderungen an die Abtastgeschwindigkeit der Auswerteelektronik gestellt werden.

Wird der Widerstand und gegebenenfalls die Diode an einer Stirnseite des Kommutators angeordnet, bleibt die gesamte axiale Höhe eines Trommelkommutators zur Ausbildung der Kontaktflächen zu den Bürsten, sowie zur Anbindung der Wicklung zur Verfügung, wobei in radialer Richtung kein zusätzlicher Bauraum benötigt wird.

Der Strom durch den Kommutator wird mittels einer Auswertevorrichtung der Elektronikeinheit der elektrischen Maschine ausgewertet, die gegenüber einer herkömmlichen Stromrippel-Auswertung keine zusätzlichen Kosten verursacht.

Die Größe des ohmschen Widerstands kann so gewählt werden, dass der durch den Widerstand verursachte Stromrippel einfach vom Hintergrund des Stromrippel-Signals höherer Ordnungen unterschieden werden kann. So kann die Größe des Widerstands beispielsweise an die Anzahl der Magnetpole und der Kommutatorlamellen angepasst werden.

Durch das zusätzliche Einfügen einer Diode zwischen den beiden Kommutatorlamellen kann die Frequenz des Widerstand-Stromrippels nochmals halbiert werden.

Aufgrund der Auswertung des Kommutatorstroms wird immer ein definierter Strom durch den konstanten Widerstand gemessen, der sich dem veränderlichen Motorstrom überlagert. Dadurch kann in jedem Arbeitspunkt der elektrischen Maschine und bei unterschiedlichen Beträgen des Motorstroms eine unverändert zuverlässige Drehzahlinformation gewonnen werden.

Bei der Ausführung mit 4 Bürsten ist eine symmetrische Anordnung mehrerer Widerstände am Umfang des Kommutators sinnvoll, um eine symmetrische Belastung der Bürsten zu erzielen. Daraus folgt auch eine symmetrisch Bestromung der Spulen am Rotor, was die Auswirkungen der Stromwelligkeitserzeugung durch den Widerstand auf die Kraftanregung in der elektrischen Maschine weiter reduziert.

### Kurze Beschreibung der Zeichnungen

Ausführungsbeispiele der Erfindung sind in der Zeichnung dargestellt und in der nachfolgenden Beschreibung näher erläutert. Es zeigen
- Figur 1: eine Ausführungen einer elektrischen Maschine zum allgemeinen Verständis des technologischen Hintergrunds, und
- Figur 2: eine erfindungsgemäße Ausführungen einer elektrischen Maschine mit erfindungsgemäßen Kommutatoren, und
- Figur 3: ein durch den Widerstand verursachtes Signal der Stromwelligkeit.

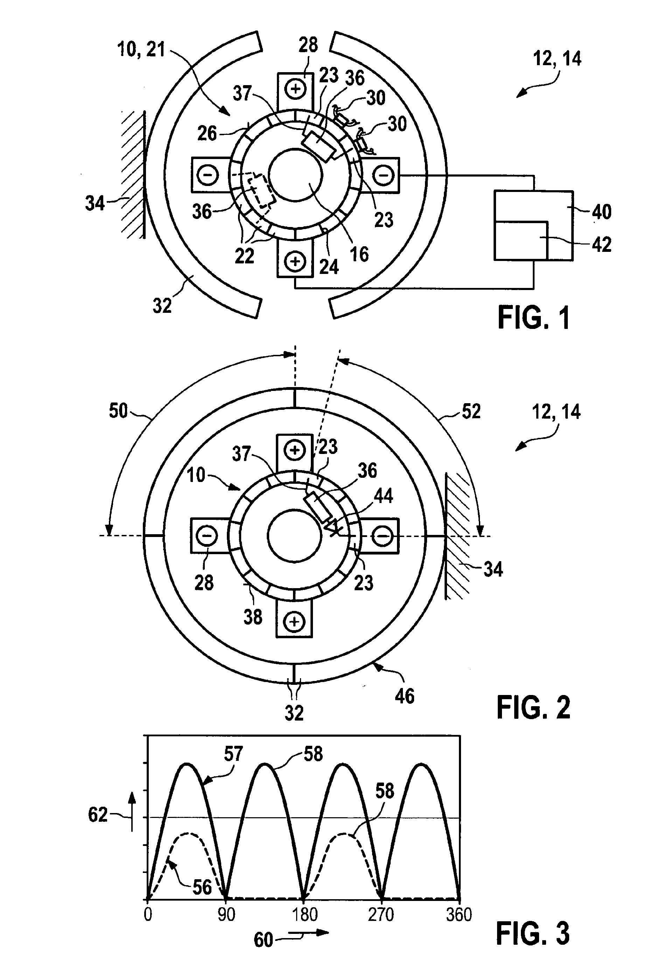

In Figur 1 ist eine elektrische Maschine 12 dargestellt, die hier als Gleichstrommotor 14 ausgebildet ist. Die elektrische Maschine 12 weist einen auf einer Rotorwelle 16 gelagerten Rotor 18 auf, auf dem ein Kommutator 10 angeordnet ist. Der Kommutator 10 weist mehrere Kommutatorlamellen 22 auf, die mittels Nuten 24 elektrisch gegeneinander isoliert sind. Die Kommutatorlamellen 22 weisen eine Kontaktfläche 26 auf, an denen Bürsten 28 anliegen, um den Kommutator 10 mit einem Kommutatorstrom zu bestromen. Die einzelnen Kommutatorlamellen 22 sind mit Wicklungsspulen 30 verbunden, um ein Magnetfeld zu erzeugen, das mit korrespondierten Magnetpolen 32 der elektrischen Maschine 12 wechselwirkt. Dadurch dreht sich der Rotor 18 gegenüber einem Stator 34, der die Magnetpole 32 trägt. Im Ausführungsbeispiel weist die elektrische Maschine 12 zwei Magnetpole 32 auf, so dass der Polteilungswinkel näherungsweise 180° beträgt. Der Kommutator 10 hat im Ausführungsbeispiel 14 Kommutatorlamellen 22, die mit insgesamt vier Bürsten 28 zusammenwirken, wobei in einer alternativen Ausführung die 2-polige Maschine mit zwei Bürsten 28 betrieben wird. Zwei einzelne Kommutatorlamellen 23 sind über einen Widerstand 36 miteinander verbunden, so dass über die Bürsten ein definierter Strom durch den konstanten Widerstand 36 fließt. In Figur 1 ist zwischen den beiden Kommutatorlamellen 23 eine weitere Kommutatorlamelle 22 angeordnet, wobei bei anderen Ausführungen, wie beispielsweise in Figur 2 auch zwei, oder drei oder mehrere Kommutatorlamellen 22 angeordnet sein können. Der Kommutator 10 ist als Trommelkommutator 21 ausgebildet, wobei der Widerstand 36 axial zum Kommutator 10 angeordnet ist. Der Widerstand 36 mit seinen elektrischen Verbindungsleitungen 37 erstreckt sich dabei radial innerhalb einer Umfangsfläche 38 des Kommutators 10. Der Widerstand 36 ist als Ohmsches Widerstandsbauteil ausgebildet, das unterschiedlich widerstandswerte aufweisen kann. Die elektrische Maschine 12 weist eine Elektronikeinheit 40 mit einer Auswertevorrichtung 42 auf, in der der Kommutatorstrom ausgewertet wird, um eine entsprechende Drehzahlinformation des Rotors 18 zu generieren.

In einer Variation der erfindungsgemäßen Vorrichtung ist in Figur 2 eine Diode 44 mit dem Widerstand 36 in Reihe geschaltet. Dadurch sind zwei bestimmte Kommutatorlamellen 23 über den Widerstand 36 und die sich daran anschließende Diode 44 miteinander verbunden. Dadurch kann bei einer Bestromung mittels der Bürsten 28 der Strom durch den ohmschen Widerstand 36 nur in eine Richtung fließen. In Figur 2 weist der Gleichstrommotor 14 einen umlaufenden Magnetring 46 auf, der einen Polteilungswinkel 50 von näherungsweise 90°, der vier Magnetpole 32 aufweist. Dabei entspricht der Polteilungswinkel 50 näherungsweise einem Umfangswinkel 52 zwischen den zwei bestimmten Kommutatorlamellen 23, die mit dem Widerstand 36 verbunden sind. In dieser Ausführung sind jeweils zwei Bürsten 28 miteinander elektrisch verbunden, so dass die Anzahl der Magnetpole 32 der Anzahl der Bürsten 28 entspricht.

Mit der elektrischen Maschine 12 gemäß Figur 2 lässt sich beispielsweise ein zusätzliches Stromwelligkeits-Signal 56 erzeugen, das in Figur 3 dargestellt ist. In Figur 3 ist auf der x-Achse der Drehwinkel 60 und auf der y-Achse die überlagerte Stromwelligkeit 62 aufgrund der erfindungsgemäßen Widerstandsanordnung dargestellt. Die Höhe der Stromwelligkeit 62 kann durch die Wahl des Widerstandswertes des Widerstands 36 eingestellt werden und damit an die Erfordernisse der Auswertevorrichtung 42 angepasst werden. Durch den Widerstand 36 generierten Stromwelligkeitssignale 56, 57 überlagern sich mit dem nicht näher dargestellten Stromwelligkeitssignal des Motorstroms, das aufgrund der Kombination der Nuten 24 mit den Magnetpolen 32 erzeugt wird.

Durch die Anordnung der Diode 44 zwischen den Kommutatorlamellen 23 wird jeder zweite Strompuls 58 unterdrückt, so dass bei der Ausführung mit vier Magnetpolen 32 nur zwei Strompulse 58 über eine Umdrehung des Kommutators 10 von 360° erzeugt werden. In Figur 3 ist ein zweites Stromwelligkeitssignal 57 dargestellt, das durch eine Ausführung ohne Diode 44 generiert wird. Dabei werden bei einer vierpoligen elektrischen Maschine 12 vier Strompulse 58 über eine Rotordrehung erzeugt.

Es sei angemerkt, dass hinsichtlich der in den Figuren und in der Beschreibung gezeigten Ausführungsbeispiele vielfältige Kombinationsmöglichkeiten der einzelnen Merkmale untereinander möglich sind. In einer Variation der Erfindung könnten beispielsweise auch mehr als zwei Kommutatorlamellen 22 mit einem Widerstand 36 verbunden werden. Die Erfindung ist auch auf die Ausführung eines Plankommutators übertragbar. Die Anordnung und Ausbildung der Magnetpole 32, sowie des Rotors 18 und des Stators 34 können der jeweiligen Anwendung angepasst werden. So kann die elektrische Maschine 12 beispielsweise auch als Außenläufer ausgebildet sein. Die elektrische Maschine 12 findet vorzugsweise Anwendung für Stellantriebe im Kraftfahrzeug, beispielsweise zur Verstellung von Sitzteilen, Fensterscheiben und Abdeckungen- ist jedoch nicht auf solche Anwendungen beschränkt.

## Patentansprüche

1. Elektrische Maschine (12), zur mechanischen Kommutierung aufweisend einen Kommutator (10) mit elektrisch gegeneinander isoliert angeordneten Kommutatorlamellen (22), die Kontaktflächen (26) zur Bestromung mittels Bürsten (28) aufweisen, wobei die Kommutatorlamellen (22) mit elektrischen Wicklungen eines Rotors (18) verbunden sind, wobei mindestens zwei Kommutatorlamellen (23) mit einem elektrischen Widerstand (36) elektrisch verbunden sind, wobei der Kommutator (10) auf einem Rotor (18) angeordnet ist, der mit Magnetpolen (32) eines Stators (34) zusammenwirkt, **dadurch gekennzeichnet, dass** die elektrische Maschine vier Magnetpole (32) aufweist, und der Kommutator (10) vierzehn Kommutatorlamellen (22) aufweist, wobei die erste Kommutatorlamelle (23) ausgehend von dieser mit der in Umfangsrichtung vierten oder fünften Kommutatorlamelle (23) elektrisch verbunden ist.

2. **Elektrische Maschine (12)** nach Anspruch 1, **dadurch gekennzeichnet, dass** der Widerstand (36) genau zwei Kommutatorlamellen (23) elektrisch miteinander verbindet.

3. **Elektrische Maschine (12)** nach einem der Ansprüche 1 oder 2, **dadurch gekennzeichnet, dass der Widerstand (36) an einer Stirnseite des Kommutators angeordnet ist, der insbesondere als Trommelkommutator ausgebildet ist**

4. **Elektrische Maschine (12)** nach einem der vorhergehenden Ansprüche, **dadurch gekennzeichnet, dass** eine Diode (44) mit dem Widerstand (36) in Reihe geschaltet ist.

5. **Elektrische Maschine (12)** nach einem der vorhergehenden Ansprüche, **dadurch gekennzeichnet, dass** der mindestens eine Widerstand (36) radial innerhalb eines äußeren Umfangs (38) der Kommutatorlamellen (22, 23) angeordnet ist.

6. Elektrische Maschine (12) mit einem Kommutator (10) nach einem der vorhergehenden Ansprüche, **dadurch gekennzeichnet, dass** sich die Magnetpole (32) über Polteilungswinkel (50) erstrecken, und ein Umfangswinkel (52) zwischen den beiden Kommutatorlamellen (23) näherungsweise dem Polteilungswinkel (50) entspricht.

7. Elektrische Maschine (12) nach einem der vorhergehenden Ansprüche, **dadurch gekennzeichnet, dass die vier Magnetpole (32) einen Polteilungswinkel (50) von näherungsweise 90° aufweisen, und** insbesondere auf einem geschlossenen, einteiligen Magnetring (46) angeordnet sind.

8. Elektrische Maschine (12) nach einem der vorhergehenden Ansprüche, **dadurch gekennzeichnet, dass** die Kommutatorlamellen (22) mit vier Bürsten (28) zusammenwirken.

9. Elektrische Maschine (12) mit einem Kommutator (10) nach einem der vorhergehenden Ansprüche, **gekennzeichnet durch** eine Elektronikeinheit (40) mit einer Vorrichtung (42) zur Auswertung einer Welligkeit des Kommutierungsstromes, um ein Maß für die Drehzahl oder die Drehgeschwindigkeit des Rotors (18) zu ermitteln.

10. Verfahren zum Betreiben einer elektronischen Maschine (12) - insbesondere Stellantriebe im Kraftfahrzeug - nach einem der vorhergehenden Ansprüche, **dadurch gekennzeichnet, dass** der elektrische Widerstand (36) zwischen den Kommutatorlamellen (23) derart dimensioniert wird, dass die Amplitudenänderungen der Stromwelligkeit (56, 57) aufgrund des Widerstandes (36) größer sind als die Amplitudenänderungen aufgrund der Nuten (24) zwischen den Kommutatorlamellen (22).

11. Verfahren zum Betreiben einer elektronischen Maschine (12) nach einem der vorhergehenden Ansprüche, **dadurch gekennzeichnet, dass** die Frequenz der Stromwelligkeit (56, 57) aufgrund des Widerstandes (36) kleiner ist als eine NutFrequenz der Amplitudenänderungen aufgrund der Nuten zwischen den Kommutatorlamellen (22).

12. Verfahren zum Betreiben einer elektronischen Maschine (12) nach einem der vorhergehenden Ansprüche, **dadurch gekennzeichnet, dass** bei der Frequenz der Stromwelligkeit (56, 57) aufgrund des Widerstandes (36) mit jeder Polteilung oder mit jeder zweiten Polteilung ein Impuls (58) generiert wird.

13. Verfahren zum Betreiben einer elektronischen Maschine (12) nach einem der vorhergehenden Ansprüche, **dadurch gekennzeichnet, dass** die Stromwelligkeit (56, 57) aufgrund des Widerstandes (36) - insbesondere deren Amplitude - unabhängig vom Betrag des Motorstroms, der dem Lastzustand der elektrischen Maschine entspricht, generiert wird.

## Claims

1. Electric machine (12) for mechanical commutation having a commutator (10) comprising commutator segments (22) arranged electrically insulated from one another, which commutator segments have contact faces (26) for energization by means of brushes (28), wherein the commutator segments (22) are connected to electrical windings of a rotor (18), wherein at least two commutator segments (23) are electrically connected to an electrical resistor (36), wherein the commutator (10) is arranged on a rotor (18), which interacts with magnet poles (32) of a stator (34), **characterized in that** the electric machine has four magnet poles (32), and the commutator (10) has 14 commutator segments (22), wherein the first commutator segment (23), starting therefrom, is electrically connected to the fourth or fifth commutator segment (23) in the circumferential direction.

2. Electric machine (12) according to Claim 1, **characterized in that** the resistor (36) connects precisely two commutator segments (23) electrically to one another.

3. Electric machine (12) according to either of Claims 1 and 2, **characterized in that** the resistor (36) is arranged on an end side of the commutator, which is in particular in the form of a drum commutator.

4. Electric machine (12) according to one of the preceding claims, **characterized in that** a diode (44) is connected in series with the resistor (36).

5. Electric machine (12) according to one of the preceding claims, **characterized in that** the at least one resistor (36) is arranged radially within an outer circumference (38) of the commutator segments (22, 23).

6. Electric machine (12) comprising a commutator (10) according to one of the preceding claims, **characterized in that** the magnet poles (32) extend over pole pitch angle (50), and a circumferential angle (52) between the two commutator segments (23) approximately corresponds to the pole pitch angle (50).

7. Electric machine (12) according to one of the preceding claims, **characterized in that** the four magnet poles (32) have a pole pitch angle (50) of approximately 90°, and in particular are arranged on a closed, single-part magnet ring (46).

8. Electric machine (12) according to one of the preceding claims, **characterized in that** the commutator segments (22) interact with four brushes (28).

9. Electric machine (12) comprising a commutator (10) according to one of the preceding claims, **characterized by** an electronics unit (40) comprising an apparatus (42) for evaluating a ripple of the commutation current in order to determine a measure of the speed or the rate of rotation of the rotor (18).

10. Method for operating an electronic machine (12) - in particular servo drives in a motor vehicle - according to one of the preceding claims, **characterized in that** the electrical resistor (36) between the commutator segments (23) is dimensioned such that the changes in amplitude of the current ripple (56, 57) owing to the resistor (36) are greater than the changes in amplitude owing to the slots (24) between the commutator segments (22).

11. Method for operating an electronic machine (12) according to one of the preceding claims, **characterized in that** the frequency of the current ripple (56, 57) owing to the resistor (36) is lower than a slot frequency of the changes in amplitude owing to the slots between the commutator segments (22).

12. Method for operating an electronic machine (12) according to one of the preceding claims, **characterized in that**, in the case of the frequency of the current ripple (56, 57) owing to the resistor (36), a pulse (58) is generated with each pole pitch or with every second pole pitch.

13. Method for operating an electronic machine (12) according to one of the preceding claims, **characterized in that** the current ripple (56, 57) is generated owing to the resistor (36) - in particular the amplitude said current ripple - independently of the magnitude of the motor current, which corresponds to the load state of the electric machine.

## Revendications

1. Machine électrique (12) pour la commutation mécanique, présentant un commutateur (10) avec des lamelles de commutateur (22) disposées de manière électriquement isolée les unes des autres, qui présentent des surfaces de contact (26) pour l'alimentation électrique au moyen de balais (28), les lamelles de commutateur (22) étant connectées à des enroulements électriques d'un rotor (18), au moins deux lamelles de commutateur (23) étant connectées électriquement à une résistance électrique (36), le commutateur (10) étant disposé sur un rotor (18) qui coopère avec des pôles magnétiques (32) d'un stator (34), **caractérisée en ce que** la machine électrique présente quatre pôles magnétiques (32), et le commutateur (10) présente quatorze lamelles de commutateur (22), la première lamelle de commutateur (23) étant connectée électriquement, partant de celle-ci, à la quatrième ou à la cinquième lamelle de commutateur (23) dans la direction périphérique.

2. Machine électrique (12) selon la revendication 1, **caractérisée en ce que** la résistance (36) relie électriquement l'une à l'autre exactement deux lamelles de commutateur (23).

3. Machine électrique (12) selon l'une quelconque des revendications 1 ou 2, **caractérisée en ce que** la résistance (36) est disposée au niveau d'un côté frontal du commutateur qui est réalisé notamment sous forme de commutateur à tambour.

4. Machine électrique (12) selon l'une quelconque des revendications précédentes, **caractérisée en ce qu'**une diode (44) est montée en série avec la résistance (36).

5. Machine électrique (12) selon l'une quelconque des revendications précédentes, **caractérisée en ce que** l'au moins une résistance (36) est disposée radialement à l'intérieur d'une périphérie extérieure (38) des lamelles de commutateur (22, 23).

6. Machine électrique (12) comprenant un commutateur (10) selon l'une quelconque des revendications précédentes, **caractérisée en ce que** les pôles magnétiques (32) s'étendent sur des angles de division polaires (50) et un angle périphérique (52) entre les deux lamelles de commutateur (23) correspond approximativement à l'angle de division polaire (50).

7. Machine électrique (12) selon l'une quelconque des revendications précédentes, **caractérisée en ce que** les quatre pôles magnétiques (32) présentent un angle de division polaire (50) de 90° approximativement, et en particulier sont disposés sur une bague magnétique fermée d'une seule pièce (46).

8. Machine électrique (12) selon l'une quelconque des revendications précédentes, **caractérisée en ce que** les lamelles de commutateur (22) coopèrent avec quatre balais (28).

9. Machine électrique (12) comprenant un commutateur (10) selon l'une quelconque des revendications précédentes, **caractérisée par** une unité électronique (40) comprenant un dispositif (42) pour analyser une ondulation du courant de commutation, afin de déterminer une mesure du régime ou de la vitesse de rotation du rotor (18).

10. Procédé pour faire fonctionner une machine électronique (12), en particulier des commandes de réglage dans un véhicule automobile, selon l'une quelconque des revendications précédentes, **caractérisé en ce que** la résistance électrique (36) entre les lamelles de commutateur (23) est dimensionnée de telle sorte que les variations d'amplitude de l'ondulation du courant (56, 57) du fait de la résistance (36) soient supérieures aux variations d'amplitude du fait des rainures (24) entre les lamelles de commutateur (22).

11. Procédé pour faire fonctionner une machine électronique (12) selon l'une quelconque des revendications précédentes, **caractérisé en ce que** la fréquence de l'ondulation du courant (56, 57) du fait de la résistance (36) est inférieure à une fréquence de rainures des variations d'amplitude du fait des rainures entre les lamelles de commutateur (22).

12. Procédé pour faire fonctionner une machine électronique (12) selon l'une quelconque des revendications précédentes, **caractérisé en ce que** dans le cas de la fréquence de l'ondulation du courant (56, 57) du fait de la résistance (36), une impulsion (58) est générée pour chaque division polaire ou pour une division polaire sur deux.

13. Procédé pour faire fonctionner une machine électronique (12) selon l'une quelconque des revendications précédentes, **caractérisé en ce que** l'ondulation du courant (56, 57) du fait de la résistance (36) - en particulier de son amplitude - est générée de manière indépendante de la valeur du courant du moteur qui correspond à l'état de charge de la machine électrique.
